(19) Europäisches Patentamt
European Patent Office
Office européen des brevets

(11) **EP 3 503 781 B1**

(12) **EUROPÄISCHE PATENTSCHRIFT**

(45) Veröffentlichungstag und Bekanntmachung des Hinweises auf die Patenterteilung:
**14.04.2021 Patentblatt 2021/15**

(21) Anmeldenummer: **17748737.8**

(22) Anmeldetag: **03.08.2017**

(51) Int Cl.:
**A47J 43/08** *(2006.01)* **B01F 7/30** *(2006.01)*

(86) Internationale Anmeldenummer:
**PCT/EP2017/069618**

(87) Internationale Veröffentlichungsnummer:
**WO 2018/036775 (01.03.2018 Gazette 2018/09)**

(54) **GETRIEBEEINHEIT MIT MEHREREN ANTRIEBSGESCHWINDIGKEITEN**

GEAR UNIT HAVING A PLURALITY OF DRIVE SPEEDS

UNITÉ DE TRANSMISSION DOTÉE DE PLUSIEURS VITESSES D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2016 DE 102016216093**

(43) Veröffentlichungstag der Anmeldung:
**03.07.2019 Patentblatt 2019/27**

(73) Patentinhaber: **BSH Hausgeräte GmbH**
**81739 München (DE)**

(72) Erfinder:
• **KOVACIC, Peter**
**3303 Gomilsko (SI)**
• **BRECKO, Ales**
**3000 Celje (SI)**
• **CATER, Matej**
**3301 Petrovce (SI)**

(56) Entgegenhaltungen:
**CN-Y- 2 621 567** **DE-A1- 4 033 020**
**DE-A1-102012 206 162** **DE-B- 1 021 986**
**DE-B- 1 219 643**

## Beschreibung

*Gebiet der Erfindung*

Die Erfindung betrifft eine Getriebeeinheit für eine Küchenmaschine. Des Weiteren betrifft die Erfindung eine Küchenmaschine mit einer Getriebeeinheit.

*Hintergrund der Erfindung*

Getriebeeinheiten für Küchenmaschinen erfüllen innerhalb einer Küchenmaschine die Aufgabe, eine von einer Eingangswelle zur Verfügung gestellte Drehgeschwindigkeit und Drehmoment in die jeweiligen Drehgeschwindigkeiten und Drehmomente von einer oder mehreren Zapfwellen umzusetzen.

In der deutschen Patentschrift DE 25 51 842 C3 ist ein elektromotorisch betriebenes Antriebsaggregat für Küchenmaschinen beschrieben, das ein Planetengetriebe mit einer Kegelradverzahnung aufweist, dessen Planetenrad mit einer geneigten Achse umläuft und mit seiner Achse die Achse des Zentralrades schneidet. Dabei kämmt das Planetenrad sowohl mit den Zähnen des Zentralrades als auch mit denen eines konzentrisch hierzu angeordneten innenverzahnten äußeren Zahnkranzes und bewegt bei seiner Taumelbewegung um das Zentralrad einen auf der Achse des Zentralrades drehbar angeordneten Lagerkörper mit, sodass der Lagerkörper auf diese Weise als Zapfwelle mit stark untersetzter Drehzahl verwendet werden kann.

Die DE 10 21 986 B zeigt eine Getriebeeinheit mit einem Planetengetriebe für eine Küchenmaschine mit zwei bodenseitigen Werkzeugaufnahmen zur Aufnahme jeweils eines Werkzeugs. Die Werkzeugsaufnahmen sind koaxial zueinander angeordnet, wobei die eine Werkzeugaufnahme in der anderen Werkzeugaufnahme drehbar gelagert ist. Die eine Werkzeugaufnahme wird über ein Sonnenrad angetrieben und die andere Werkzeugaufnahme durch Abrollen entlang eines gehäuseseitigen Zahnkranzes.

Die DE 10 2012 206162 A1 der Anmelderin zeigt eine Küchenmaschine mit einer Getriebeeinheit, die eine Vielzahl von oberseitig austretenten Ausgangswellen hat. Die Getriebeeinheit weist hierzu ein Planetengetriebe mit einem Sonnenrad auf.

Die DE 40 33 020 A1 zeigt eine Küchenmaschine mit einer Getriebeeinheit, die als ein Planetengetriebe ausgeführt ist und zwei bodenseitige Werkzeugaufnahmen zur Aufnahme jeweils eines Werkzeugs umfasst. Der Antrieb der Werkzeugaufnahmen erfolgt über Planetenräder, die mit einem gemeinsamen Sonnenrad kämmen. Zudem ist ein zweites Sonnenrad vorgesehen, das einen Werkzeugträger selbst in Drehbewegung versetzt.

*Der Erfindung zugrundeliegende Aufgabe*

Es ist die Aufgabe der vorliegenden Erfindung, in einem Rühr- oder Knetwerk einer Küchenmaschine ein eingestecktes Werkzeug mit optimaler Drehzahl und Drehmoment anzutreiben. Darüber hinaus ist es Aufgabe der Erfindung, die Leistungsaufnahme einer Küchenmaschine und die Lärmemission der Küchenmaschine zu senken.

*Erfindungsgemäße Lösung*

Diese Aufgabe wird gelöst durch eine Getriebeeinheit mit den Merkmalen des Patentanspruchs 1 und durch eine Küchenmaschine mit den Merkmalen des Patentanspruch 11.

Die Lösung der gestellten Aufgabe gelingt durch Bereitstellen einer Getriebeeinheit für eine Küchenmaschine, welche eine erste Getriebestufe mit einem ersten Sonnenrad und mindestens einem mit dem ersten Sonnenrad in Eingriff stehenden ersten Planetenrad, das an einem Planetenträger drehbar gelagert ist, und ein erstes Kupplungsstück zur Aufnahme einer ersten Welle eines ersten Werkzeugs umfasst, wobei das erste Kupplungsstück mit einem ersten Planetenrad der ersten Getriebestufe verbunden ist. Zusätzlich zum ersten Kupplungsstück ist ein zweites Kupplungsstück zur Aufnahme einer zweiten Welle eines zweiten Werkzeugs am oder im Planetenträger rotierbar gelagert, wobei die Getriebeeinheit dazu ausgelegt ist, das zweite Kupplungsstück so anzutreiben, dass das zweite Kupplungsstück mit einer vom ersten Kupplungsstück unterschiedlichen Eigenrotation mit dem Planetenträger mitrotiert.

Die erste Getriebestufe der Getriebeeinheit kann beispielsweise als Planetengetriebestufe ausgebildet sein und umfasst ein Sonnenrad und ein mit dem Sonnenrad in Eingriff stehendes erstes Planetenrad. Mit dem ersten Planetenrad ist ein erstes Kupplungsstück verbunden, in das eine erste Welle eines ersten Werkzeugs einsteckbar ist. Das erste Kupplungsstück ist zusammen mit dem ersten Planetenrad im Planetenträger rotierbar gelagert und rotiert mit dem Planetenträger um die zentrale Achse der Getriebeeinheit und zusätzlich mit einer Eigendrehgeschwindigkeit um die eigene Achse. Zusätzlich ist im Planetenträger ein zweites Kupplungsstück drehbar gelagert, das ebenfalls zusammen mit dem Planetenträger um die zentrale Achse der Getriebeeinheit rotiert, wobei sich die Eigenrotation des zweiten Kupplungsstücks von der Eigenrotation des ersten Kupplungsstücks unterscheidet. Insbesondere unterscheidet sich die Eigenrotation des zweiten Kupplungsstücks in mindestens einem von Rotationsgeschwindigkeit und Drehrichtung von der Eigenrotation des ersten Kupplungsstücks. Die Getriebeeinheit umfasst eine zweite Getriebestufe, die dazu ausgelegt ist, das zweite Kupplungsstück so anzutreiben, dass das zweite Kupplungsstück mit einer vom ersten Kupplungsstück unterschiedlichen Eigenrotation mit dem Planetenträger mitrotiert. Hier dient die erste Getriebestufe also zum Antrieb des ersten Kupplungsstücks und die zweite Getriebestufe zum Antrieb des zweiten Kupplungsstücks. Das Bereitstellen einer separaten zweiten Getriebestufe hat den Vorteil, dass das erste und das zweite Kupplungsstück koaxial zueinander angeordnet werden können, was eine gemeinsame Aufnahme für die von den Kupplungsstücken angetriebenen Werkzeuge ermöglicht. Dadurch wird der Aufbau der Küchenmaschine vereinfacht. Die zweite Getriebestufe umfasst ein zweites Sonnenrad und mindestens ein mit dem zweiten Sonnenrad in Eingriff stehendes zweites Planetenrad, das an dem Planetenträger drehbar gelagert ist, wobei eines der zweiten Planetenräder mit dem zweiten Kupplungsstück verbunden ist. Durch das zweite Planetenrad wird das zweite Kupplungsstück in eine Eigenrotation versetzt, die sich von der Eigenrotation des ersten Kupplungsstücks unterscheidet. Dabei kann sich die Eigenrotation des zweiten Kupplungsstücks in mindestens einem von Rotationsgeschwindigkeit und Drehrichtung von der Eigenrotation des ersten Kupplungsstücks unterscheiden. Dadurch wird ein Antrieb der Werkzeuge mit zwei unterschiedlichen Gängen ermöglicht.

Dadurch wird die Möglichkeit geschaffen, unterschiedliche Werkzeuge mit unterschiedlichen Drehgeschwindigkeiten, Drehrichtungen und Drehmomenten anzutreiben. Beispielsweise benötigt ein Rührwerkzeug wie beispielsweise ein Schneebesen zum Betrieb eine höhere Drehgeschwindigkeit als ein Knethaken, andererseits ist zum Betrieb eines Knethakens ein vergleichsweise hohes Drehmoment erforderlich. Insofern wird durch die zwei mit unterschiedlicher Eigenrotation rotierenden Kupplungsstücke die Möglichkeit geschaffen, unterschiedliche Werkzeuge mit der jeweils passenden Drehgeschwindigkeit und Drehrichtung anzutreiben. Zu einem bestimmten Rühr-, Knet- oder sonstigen Werkzeug kann somit eine passende Antriebsgeschwindigkeit und ein geeignetes Drehmoment ausgewählt werden. Es wird also für jedes Werkzeug das für das jeweilige Werkzeug am besten geeignete Übersetzungsverhältnis bereitgestellt.

Hieraus ergibt sich noch ein weiterer Vorteil. Bei bisherigen Küchenmaschinen stand im Rühr- oder Knetwerk bislang ein einziges Kupplungsstück zur Verfügung, das mit einer bestimmten Drehgeschwindigkeit angetrieben wurde. Um hier dennoch die unterschiedlichen Anforderungen an Drehgeschwindigkeit und Drehmoment erfüllen zu können, wurde die Motorleistung so ausgelegt, dass mit einem Übersetzungsverhältnis sowohl die Anforderungen an die Drehgeschwindigkeit als auch die Anforderungen an das Drehmoment erfüllt werden konnten. Dies führte dazu, dass der Motor der Küchenmaschine eine vergleichsweise hohe Leistung aufweisen musste. Bei der vorliegenden Erfindung wird für jedes Werkzeug das passende Übersetzungsverhältnis gewählt. Dadurch kann die Motorleistung insgesamt geringer gewählt werden, so dass der Motor verbrauchsärmer und leiser ausgelegt werden kann. Die Erfindung führt also auch zu einer Einsparung der vom Motor aufgenommenen Leistung.

Eine erfindungsgemäße Küchenmaschine umfasst eine vorstehend beschriebene Getriebeeinheit. Dadurch werden unterschiedliche Gänge für das Rühr- und Knetwerk der Küchenmaschine bereitgestellt.

*Bevorzugte Ausgestaltungen der Erfindung*

Vorzugsweise ist das erste Kupplungsstück dazu ausgelegt, zugleich eine Eigenrotation um die eigene Achse auszuführen und mit dem Planetenträger um eine Drehachse des Planetenträgers rotierend umzulaufen. Das erste Kupplungsstück führt also eine überlagerte Bewegung aus, die zum Einen aus einer Rotation des ersten Kupplungsstücks mit dem Planetenträger um die Achse des Planetenträgers und zum Anderen eine Rotation des ersten Kupplungsstücks um die eigene Achse umfasst. Dabei dient das erste Kupplungsstück zur Aufnahme einer ersten Welle eines ersten Werkzeugs. Dadurch führt auch das erste Werkzeug die überlagerte Rotationsbewegung durch, was zu einer guten Durchmischung des Rührguts führt.

Vorzugsweise ist das zweite Kupplungsstück dazu ausgelegt, zugleich eine Eigenrotation um die eigene Achse auszuführen und mit dem Planetenträger um eine Drehachse des Planetenträgers rotierend umzulaufen. Insofern führt auch das zweite Kupplungsstück eine überlagerte Bewegung aus Eigenrotation und um die eigene Achse und Drehbewegung um die Achse des Planetenträgers durch, wobei das zweite Kupplungsstück allerdings mit einer anderen Eigenrotation rotiert als das erste Kupplungsstück, wobei sich die Eigenrotation des zweiten Kupplungsstücks von der des ersten Kupplungsstücks in mindestens einem von Rotationsgeschwindigkeit und Drehrichtung unterscheidet. Dadurch können zwei unterschiedliche Gänge für den Betrieb von Werkzeugen zur Verfügung gestellt werden, ein langsamer drehender Gang und ein schneller drehender Turbo-Gang.

Vorzugsweise sind das erste Kupplungsstück und das zweite Kupplungsstück an oder in dem Planetenträger exzentrisch gelagert. Infolge der exzentrischen Lagerung kommt es zu einer Drehbewegung des ersten und des zweiten Kupplungsstücks um die Drehachse des Planetenträgers.

Vorzugsweise ist das erste Kupplungsstück koaxial zu dem zweiten Kupplungsstück angeordnet. Durch die koaxiale Anordnung beider Kupplungsstücke kann erreicht werden, dass beide Kupplungsstücke über eine gemeinsame Einstecköffnung zugänglich sind, in die wahlweise eine erste Welle eines ersten Werkzeugs oder eine zweite Welle eines zweiten Werkzeugs einsteckbar ist.

Vorzugsweise fällt die Achse einer von dem ersten Kupplungsstück antreibbaren ersten Welle mit der Achse einer von dem zweiten Kupplungsstück antreibbaren zweiten Welle zusammen. Durch das erste Kupplungsstück und das zweite Kupplungsstück wird ein koaxialer Antrieb ermöglicht, wobei sich das erste Kupplungsstück und das zweite Kupplungsstück in Bezug auf ihre Rotationsgeschwindigkeit, in Bezug auf ihre Drehrichtung oder sowohl hinsichtlich Rotationsgeschwindigkeit und Drehrichtung unterscheiden können.

Vorzugsweise weist die erste Getriebestufe zusätzlich einen in einem Gehäuse der Getriebeeinheit angeordneten innenverzahnten Zahnkranz auf, der mit dem mindestens einen ersten Planetenrad kämmt. Die erste Getriebestufe ist hier als vollständige Planetengetriebestufe ausgebildet, bei der das mindestens eine erste Planetenrad sowohl mit dem ersten Sonnenrad als auch mit dem innenverzahnten Zahnkranz kämmt. Dadurch wird eine definierte Bewegung des mindestens einen ersten Planetenrades relativ zum ersten Sonnenrad und zum innenverzahnten Zahnkranz ermöglicht. Durch die Bewegung des mindestens einen ersten Planetenrads wird auch die Rotation des Planetenträgers festgelegt.

Vorzugsweise ist die Rotation des Planetenträgers durch eine Abwälzung des mindestens einen ersten Planetenrads auf dem innenverzahnten Zahnkranz festgelegt. Aus der Abwicklung des mindestens einen ersten Planetenrads am innenverzahnten Zahnkranz ergibt sich somit die Rotation des Planetenträgers, welcher seinerseits das erste und das zweite Kupplungsstück mitnimmt.

Vorzugsweise sind das mindestens eine erste Planetenrad und das mindestens eine zweite Planetenrad jeweils als Kegelräder ausgebildet. Dadurch ergibt sich eine geneigte Orientierung der jeweiligen Welle des Werkzeugs relativ zur Drehachse des Planetenträgers, sodass das sich drehende Werkzeug auf einem Konus umläuft, sodass das Werkzeug eine Taumelbewegung ausführt.

Vorzugsweise sind das mindestens eine erste Planetenrad und das mindestens eine zweite Planetenrad jeweils als Stirnräder ausgebildet. In diesem Fall sind die Wellen der eingesteckten Werkzeuge parallel zur Drehachse des Planetenträgers ausgebildet, sodass die Werkzeuge entlang eines Mantels eines Kreiszylinders umlaufen.

Vorzugsweise sind das mindestens eine erste Planetenrad und das mindestens eine zweite Planetenrad jeweils als Hypoidräder ausgebildet. In diesem Fall sind die Drehachsen der Planetenräder schräg geneigt zur Drehachse des Planetenträgers ausgebildet und laufen in einem gewissen Abstand an der Drehachse des Planetenträgers vorbei, wobei die Drehachsen der Planetenräder die Drehachse des Planetenträgers nicht schneiden. Die Drehachsen der Planetenräder laufen zusammen mit der rotierbaren Trägereinheit um die Drehachse des Planetenträgers um, so dass die eingesteckten Werkzeuge entlang eines Mantels eines Hyperboloids umlaufen.

Vorzugsweise weist das erste Kupplungsstück ein erstes Passungsprofil auf, in dem ein an einer ersten Welle eines ersten Werkzeugs angebrachtes erstes Passungsstück formschlüssig aufnehmbar ist. Über das erste Passungsprofil und das darin formschlüssig aufnehmbare erste Passstück wird eine drehfeste Kupplung zwischen dem ersten Kupplungsstück und der ersten Welle hergestellt. Dabei kann das erste Passungsprofil als geeignetes Mitnahmeprofil ausgebildet sein, beispielsweise als polygonales Profil.

Vorzugsweise weist das zweite Kupplungsstück ein zweites Passungsprofil auf, in dem ein an einer zweiten Welle eines zweiten Werkzeugs angebrachtes zweites Passungsstück formschlüssig aufnehmbar ist. Über das zweite Passungsprofil zusammen mit dem darin formschlüssig aufnehmbaren zweiten Passungsstück wird eine drehfeste Kupplung zwischen dem zweiten Kupplungsstück und der darin eingeschobenen zweiten Welle des zweiten Werkzeugs hergestellt.

Vorzugsweise ist das erste Kupplungsstück als Hohlwelle ausgebildet, die sich durch das erste Planetenrad hindurch erstreckt. In diese Hohlwelle kann die erste Welle des ersten Werkzeugs eingeschoben werden.

Vorzugsweise ist das erste Kupplungsstück als Hohlwelle ausgebildet, die sich durch das erste Planetenrad hindurch erstreckt und die im Inneren zumindest abschnittsweise ein erstes Passungsprofil aufweist, in dem ein an einer ersten Welle eines ersten Werkzeugs angebrachtes erstes Passungsstück formschlüssig aufnehmbar ist. Beim Einschieben des Passungsstücks der ersten Welle in die Hohlwelle kommt es zu einem Eingriff zwischen dem ersten Passungsprofil im Inneren der Hohlwelle und dem ersten Passungsstück, sodass eine drehfeste Kupplung zwischen der Hohlwelle und der ersten Welle des ersten Werkzeugs hergestellt wird.

Vorzugsweise ist über die jeweiligen Zähnezahlen des ersten Sonnenrads, des ersten Planetenrads, des zweiten Sonnenrads und des zweiten Planetenrads festlegbar, ob das zweite Kupplungsstück in derselben Drehrichtung wie das erste Kupplungsstück oder in entgegengesetzter Drehrichtung wie das erste Kupplungsstück rotiert. Über die Zähnezahlen der Zahnräder ist also auch die Drehrichtung des zweiten Kupplungsstücks festlegbar.

Vorzugsweise ist die zweite Getriebestufe unmittelbar über der ersten Getriebestufe angeordnet. Dadurch wird die Lagerung des mindestens einen zweiten Planetenrads am Planetenträger der ersten Getriebestufe erleichtert, sodass das mindestens eine zweite Planetenrad rotierend mit dem Planetenträger mitbewegt wird.

Vorzugsweise ist das mit dem zweiten Kupplungsstück verbundene zweite Planetenrad unmittelbar über dem mit dem ersten Kupplungsstück verbundenen ersten Planetenrad angeordnet. Dadurch wird ein Antrieb durch zwei koaxial zueinander angeordnete Kupplungsstücke mit unterschiedlicher Eigenrotation ermöglicht, wobei die Wellen der jeweiligen Werkzeuge über eine gemeinsame Einlassöffnung eingesteckt werden können.

Vorzugsweise ist das zweite Planetenrad auf dem ersten Planetenrad oder auf dem mit dem ersten Planetenrad verbundenen ersten Kupplungsstück rotierbar gelagert. Beispielsweis kann das erste Kupplungsstück ein entsprechendes Lager für die drehbare Lagerung des zweiten Planetenrades auf dem ersten Kupplungsstück aufweisen.

Vorzugsweise ist das zweite Kupplungsstück als in dem zweiten Planetenrad vorgesehene Aufnahme ausgebildet. In diese im zweiten Planetenrad vorgesehene Aufnahme kann eine zweite Welle eines zweiten Werkzeugs eingeschoben werden. Vorzugsweise ist das zweite Kupplungsstück als in dem zweiten Planetenrad vorgesehene Aufnahme ausgebildet, welche ein zweites Passungsprofil aufweist, in dem ein an einer zweiten Welle eines zweiten Werkzeugs angebrachtes zweites Passungsstück formschlüssig aufnehmbar ist. Beim Einschieben der zweiten Welle des zweiten Werkzeugs in die im zweiten Planetenrad vorgesehene Aufnahme kommt das zweite Passungsstück in Eingriff mit dem zweiten Passungsprofil der Aufnahme, sodass eine drehfeste Kupplung zwischen dem zweiten Planetenrad und der zweiten Welle des zweiten Werkzeugs hergestellt wird.

Vorzugsweise ist das erste Kupplungsstück als Hohlwelle ausgebildet, die sich durch das erste Planetenrad hindurch erstreckt, wobei das zweite Kupplungsstück als in dem zweiten Planetenrad vorgesehene Aufnahme ausgebildet ist, und wobei die Hohlwelle zu der im zweiten Planetenrad vorgesehenen Aufnahme konzentrisch und koaxial ausgebildet ist. Durch die konzentrische Ausbildung der Hohlwelle und der im zweiten Planetenrad vorgesehenen Aufnahme kann erreicht werden, dass ein eingestecktes Werkzeug wahlweise durch die Hohlwelle oder die im zweiten Planetenrad vorgesehene Aufnahme angetrieben wird, wobei durch eine geeignete Wahl des am Ende der Welle des Werkzeugs angebrachten Passungsstücks festgelegt werden kann, durch welche der beiden Kupplungsstücke das jeweilige Werkzeug angetrieben wird. Wenn das Werkzeug ein erstes Passungsstück aufweist, wird es durch die Hohlwelle angetrieben, und wenn das Werkzeug ein zweites Passungsstück aufweist, wird es durch die Aufnahme im zweiten Planetenrad angetrieben.

Vorzugsweise weist das erste Passungsprofil einen größeren Durchmesser auf als das zweite Passungsprofil. Weiter vorzugsweise ist eine zweite Welle eines zweiten Werkzeugs durch das als Hohlwelle ausgebildete erste Kupplungsstück hindurch in das als Aufnahme im zweiten Planetenrad ausgebildete zweite Kupplungsstück einschiebbar. Da das zweite Passungsprofil einen kleineren Durchmesser aufweist als das erste Passungsprofil, kann die zweite Welle durch die Hohlwelle hindurch in das zweite Kupplungsstück eingesteckt werden. In diesem Fall wird die zweite Welle durch das zweite Planetenrad und nicht durch die Hohlwelle angetrieben. Wenn eine Welle jedoch ein erstes Passungsstück aufweist, dann kommt die Welle mit dem ersten Passungsprofil der Hohlwelle in Eingriff und wird durch die Hohlwelle angetrieben.

In einem nicht von der Erfindung erfassten Beispiel umfasst die erste Getriebestufe zusätzlich ein weiteres Planetenrad, das mit dem zweiten Kupplungsstück verbunden ist und dazu ausgelegt ist, das zweite Kupplungsstück so anzutreiben, dass das zweite Kupplungsstück mit einer vom ersten Kupplungsstück unterschiedlichen Eigenrotation mit dem Planetenträger mitrotiert. Bei diesem Beispiel erfolgt der Antrieb des zweiten Kupplungsstücks ebenfalls durch die erste Getriebestufe, welche hierzu zusätzlich zu dem mindestens einen ersten Planetenrad noch ein weiteres Planetenrad aufweist, wobei eines der ersten Planetenräder für den Antrieb des ersten Kupplungsstücks und das weitere Planetenrad für den Antrieb des zweiten Kupplungsstücks vorgesehen ist.

Vorzugsweise unterscheidet sich die Zähnezahl des weiteren Planetenrads von der Zähnezahl des mindestens einen ersten Planetenrads. Aus dem Verhältnis der Zähnezahlen ergibt sich hier das Verhältnis der Rotationsgeschwindigkeiten des ersten und des zweiten Kupplungsstücks. Insofern kann durch Bereitstellen eines zusätzlichen weiteren Planetenrads in der ersten Getriebestufe eine Eigenrotation des zweiten Kupplungsstücks erzielt werden, die sich von der Eigenrotation des ersten Kupplungsstücks unterscheidet.

Vorzugsweise ist das erste Kupplungsstück für den Antrieb eines ersten Typs von Werkzeugen ausgebildet, zu deren Betrieb ein vergleichsweise hohes Drehmoment bei vergleichsweise niedriger Drehzahl erforderlich ist. Dies ist beispielsweise für das Kneten von Teigen von Vorteil, denn hierzu wird ein vergleichsweise hohes Drehmoment bei vergleichsweise geringer Rotationsgeschwindigkeit benötigt. Insofern eignet sich das erste Kupplungsstück beispielsweise zum Antrieb von Knetwerkzeugen, beispielsweise zum Antrieb eines Knethakens.

Vorzugsweise ist das zweite Kupplungsstück für den Antrieb eines zweiten Typs von Werkzeugen ausgebildet, zu deren Betrieb ein vergleichsweise niedriges Drehmoment bei vergleichsweise hoher Drehzahl erforderlich ist. Beispielsweise ist es beim Antrieb eines Schneebesens von Vorteil, wenn der Schneebesen mit hoher Drehzahl angetrieben wird, denn dadurch kann Eiweiß oder Schlagsahne in kurzer Zeit aufgeschlagen werden. Im Gegensatz zum Kneten von Teigen ist dabei jedoch kein hohes Drehmoment erforderlich. Vorzugsweise ist das zweite Kupplungsstück dazu ausgebildet, eine höhere Drehzahl und ein niedrigeres Drehmoment zur Verfügung zu stellen als das erste Kupplungsstück. Durch die Bereitstellung von unterschiedlichen Drehzahlen und Drehmomenten kann für jedes Werkzeug die für das jeweilige Werkzeug am besten geeignete Kombination von Drehzahl und Drehmoment zur Verfügung gestellt werden. Dabei ermöglich der zusätzliche Turbo-Gang die Bereitstellung einer höheren Drehzahl als bisher. Dadurch kann insbesondere auch vermieden werden, dass man bei der Motorleistung einen Kompromiss zwischen Drehzahl und Leistung finden müsste. Durch die Möglichkeit, zwischen verschiedenen Übersetzungsverhältnissen das geeignete herauszusuchen, kann die benötigte Motorleistung insgesamt abgesenkt werden, sodass man mit geringerer Motorleistung auskommt und beim Betrieb des Motor weniger Lärm entsteht.

Vorzugsweise ist der Planetenträger als abtriebsseitige Ausgangswelle einsetzbar. Der Planetenträger selbst kann ebenfalls als Zapfwelle genutzt werden und zum Antrieb von Zubehörteilen wie beispielsweise eines Fleischwolfs, eines Eisbereiters oder eines Pastavorsatzes genutzt werden.

Vorzugsweise ist die Getriebeeinheit dazu ausgebildet, in einen Arm einer Küchenmaschine integriert zu werden. Infolge der übereinander angeordneten Getriebestufen kann die Getriebeeinheit vergleichsweise kompakt gebaut werden, sodass sie im Arm der Küchenmaschine Platz findet.

*Kurzbeschreibung der Zeichnungen*

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:

Figur 1:     Fig. 1 zeigt eine Ansicht einer Küchenmaschine mit einer in den Arm der Küchenmaschine integrierten Getriebeeinheit.

Figur 2:     Fig. 2 zeigt eine schematische Darstellung der Getriebestufen einer Getriebeeinheit.

Figur 3:     Fig. 3 zeigt eine detaillierte Darstellung der Getriebeeinheit im Längsschnitt.

Figur 4a:     Fig. 4a zeigt eine schematische Darstellung der Getriebestufen einer weiteren Getriebeeinheit.

Figur 4b:     Fig. 4b zeigt eine schematische Darstellung der Getriebestufen einer Getriebeeinheit, die nicht von der Erfindung umfasst ist.

Figur 5:     Fig. 5 zeigt eine Halterungs- und Antriebsvorrichtung für rotierende Rühr- oder Knetwerkzeuge.

*Detaillierte Beschreibung von Ausführungen der Erfindung*

Bei der nachfolgenden Beschreibung von bevorzugten Ausführungsformen der vorliegenden Erfindung bezeichnen gleiche Bezugszeichen gleiche oder vergleichbare Komponenten.

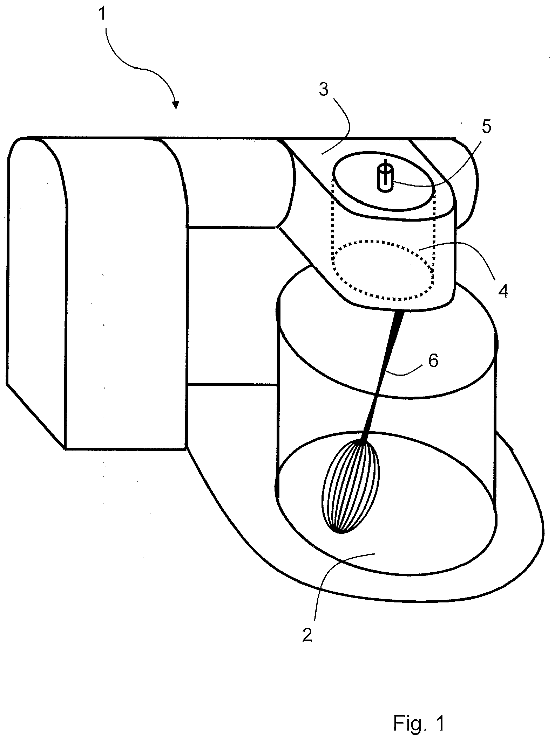

In Figur 1 ist eine Küchenmaschine 1 mit einer Rührschüssel 2 gezeigt, wobei die Küchenmaschine 1 über einen Arm 3 verfügt, der zum Auswechseln der Werkzeuge hochgeklappt werden kann. In den Arm 3 der Küchenmaschine ist eine Getriebeeinheit 4 integriert, die an ihrer Oberseite eine oder mehrere abtriebsseitige erste Ausgangswellen 5 zur Verfügung stellt, mit denen eine Mehrzahl von unterschiedlichen Aufsätzen angetrieben werden kann. Beispielsweise kann durch die an der Oberseite der Getriebeeinheit 4 austretenden Ausgangswellen ein Mixer, ein Universalzerkleinerer, ein Hobel, eine Reibe, ein Würfelscheider oder eine Zitruspresse etc. angetrieben werden. Hierzu kann beispielsweise an der Oberseite des Arms 3 oberhalb der Getriebeeinheit 4 eine entsprechende Bajonettkupplung vorgesehen sein. An der Unterseite der Getriebeeinheit 4 werden ein oder mehrere Kupplungsstücke für abtriebsseitige zweite Ausgangswellen zur Verfügung gestellt, die in einer rotierenden Trägereinheit gelagert sind und rotierend umlaufen. Diese Kupplungsstücke für zweite Ausgangswellen an der Unterseite der Getriebeeinheit 4 können beispielsweise zum Antrieb eines Rühr- oder Knetwerkzeugs 6, beispielsweise eines Knethakens oder eines Schneebesens genutzt werden. Die Kupplungsstücke für die zweiten Ausgangswellen werden vorzugsweise durch Planetenräder eines Planetengetriebes angetrieben, wobei ein Planetenrad das jeweilige Kupplungstück antreibt, in das eine Antriebswelle für ein Knet- oder Rührwerkzeug eingeschoben werden kann. Darüber hinaus kann auch die rotierbare Trägereinheit selbst, die mit dem Planetenträger des Planetengetriebes verbunden ist, als Zapfwelle mit stark untersetzter Drehzahl zum Antrieb von Werkzeugen benutzt werden, beispielsweise um einen Fleischwolf, eine Getreidemühle, einen Pastavorsatz oder einen Eisbereiter anzutreiben.

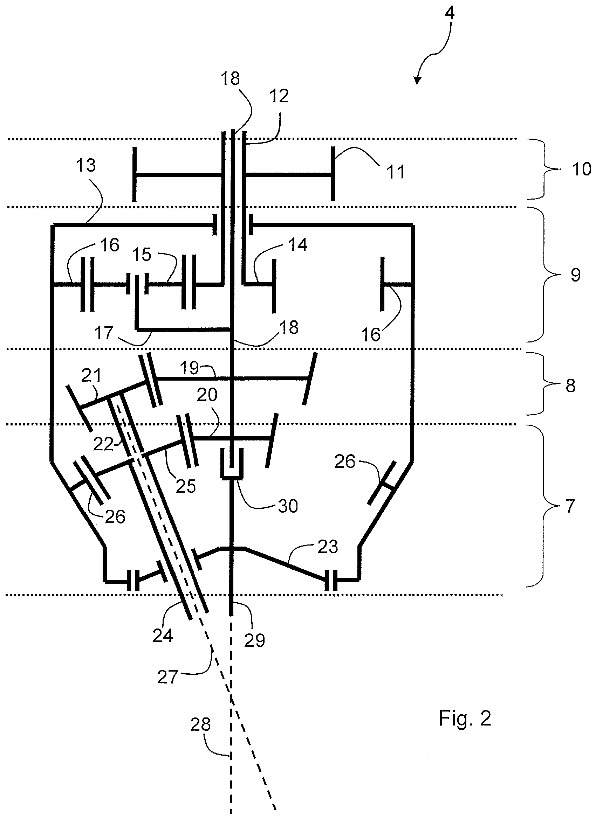

In Figur 2 ist eine schematische Ansicht der Getriebeeinheit 4 gezeigt, aus der zunächst erkennbar ist, dass die Getriebeeinheit 4 vier übereinander angeordnete Getriebestufen 7, 8, 9 und 10 umfasst, nämlich in der Reihenfolge von unten nach oben eine erste Getriebestufe 7, eine zweite Getriebestufe 8, eine dritte Getriebestufe 9 und eine vierte Getriebestufe 10. Die einzelnen Getriebestufen 7, 8, 9 und 10 sind übereinander angeordnet und konzentrisch zueinander ausgebildet, wobei jede der Getriebestufen 7 bis 10 als drehsymmetrische Getriebestufe realisiert ist.

Die vierte Getriebestufe 10 ist als Antriebsstufe der Getriebeeinheit 4 ausgebildet und umfasst eine Riemenscheibe 11, die mittels eines Zahnriemens von der Motoreinheit aus antreibbar ist. Die Riemenscheibe 11 ist mit einer antriebsseitigen Eingangswelle 12 verbunden, die als Hohlwelle ausgebildet ist. Diese antriebsseitige Eingangswelle 12 wird an der Oberseite der Getriebeeinheit 4 als Zapfwelle zur Verfügung gestellt und kann beispielsweise zum Antrieb eines Universalzerkleinerers, eines Hobels, einer Reibe etc. genutzt werden.

Die erste, zweite und dritte Getriebestufe 7, 8, 9 sind innerhalb eines gemeinsamen Gehäuses 13 der Getriebeeinheit 4 übereinander angeordnet untergebracht. Dabei sind die erste, zweite und dritte Getriebestufe 7, 8, 9 jeweils als Planetengetriebestufen ausgebildet, wobei die erste und zweite Getriebestufe 7 und 8 eine Kegelradverzahnung aufweisen. Alternativ dazu könnten diese Planetengetriebestufen auch mit Stirnrädern anstatt von Kegelrädern realisiert werden.

Alternativ dazu könnten als Zahnräder der Planetengetriebestufen auch Hypoidräder anstelle von Kegelrädern verwendet werden. In diesem Fall würden die Drehachsen der Planetenräder schräg zur zentralen Achse der Getriebeeinheit verlaufen und die zentrale Achse nicht schneiden. Die Drehachsen der Planetenräder würden in einem gewissen Abstand an der zentralen Achse vorbeilaufen und zusammen mit der rotierbaren Trägereinheit um die zentrale Achse der Getriebeeinheit umlaufen. Dadurch wird beispielsweise ermöglicht, dass das jeweilige Knet- oder Rührwerkzeug das Bearbeitungsgut in der Schüssel umlaufend bearbeitet, wodurch der benötigte Durchmesser des jeweiligen Knet- oder Rührwerkzeugs verringert werden kann, so dass die benötigte Kraft reduziert wird.

Das dritte Sonnenrad 14 der dritten Getriebestufe 9 ist mit der antriebsseitigen Eingangswelle 12 verbunden. Wenn sich die Riemenscheibe 11 dreht, wird daher auch das dritte Sonnenrad 14 in Rotation versetzt. Die dritte Getriebestufe 9 umfasst außerdem mindestens ein drittes Planetenrad 15, das sowohl mit dem dritten Sonnenrad 14 als auch mit dem zweiten innenverzahnten Zahnkranz 16 kämmt, der an der Innenseite des Gehäuses 13 angebracht bzw. angeformt ist. Das mindestens eine dritte Planetenrad 15 ist an einem Planetenträger 17 gelagert, der mit der abtriebsseitigen Ausgangswelle 18 verbunden ist, die den oberen Abschnitt einer zentralen Welle bildet. Die abtriebsseitige Ausgangswelle 18 wird an der Oberseite der Getriebeeinheit 4 als Zapfwelle zur Verfügung gestellt und verläuft koaxial zur antriebsseitigen Eingangswelle 12, die als Hohlwelle ausgebildet ist und die abtriebsseitige Ausgangswelle 18 konzentrisch umschließt. Wenn das dritte Sonnenrad 14 in Rotation versetzt wird, bewegt sich das mindestens eine dritte Planetenrad 15 um das dritte Sonnenrad 14 herum und versetzt so den Planetenträger 17 in Rotation, der mit der abtriebsseitigen Ausgangswelle 18 verbunden ist. Dabei ist die Rotationsgeschwindigkeit des Planetenträgers 17 in der Regel geringer als die Rotationsgeschwindigkeit der antriebsseitigen Eingangswelle 12. Die abtriebsseitige Ausgangswelle 18 kann daher zum Antrieb von Aufsätzen verwendet werden, die eine vergleichsweise geringe Rotationsgeschwindigkeit benötigen, beispielsweise zum Antrieb eines Würfelschneiders oder einer Zitruspresse. Durch das Bereitstellen von mehreren koaxial zueinander ausgebildeten Zapfwellen an der Oberseite der Getriebeeinheit 4 können verschiedene Zubehörteile mit unterschiedlichen Anforderungen in Bezug auf Rotationsgeschwindigkeit und Drehmoment angetrieben werden.

Die abtriebsseitige Ausgangswelle 18 treibt darüber hinaus das zweite Sonnenrad 19 der zweiten Getriebestufe 8 sowie das erste Sonnenrad 20 der ersten Getriebestufe 7 an, die in dem in Figur 2 gezeigten Beispiel jeweils als Kegelräder ausgebildet sind. Innerhalb der zweiten Getriebestufe 8 ist ein zweites Planetenrad 21 vorgesehen, das mit dem zweiten Sonnenrad 19 kämmt und mit einem Kupplungsstück 22 für eine Ausgangswelle verbunden ist. Das Kupplungsstück 22 ist innerhalb der rotierbaren Trägereinheit 23 koaxial zu einer Hohlwelle 24 rotierbar gelagert und bewegt sich mit dem rotierbaren Trägereinheit 23 mit. Die Hohlwelle 24 ist ebenfalls in der rotierbaren Trägereinheit 23 rotierbar gelagert. Die Hohlwelle 24 wird durch die erste Getriebestufe 7 angetrieben und ist mit dem ersten Planetenrad 25 verbunden. Das erste Planetenrad 25 kämmt mit dem ersten Sonnenrad 20 sowie mit dem ersten innenverzahnten Zahnkranz 26, der an der Innenseite des Gehäuses 13 angebracht bzw. angeformt ist.

Infolge der Kegelradgeometrie verläuft die Ache 27 des Kupplungsstücks 22 und der Hohlwelle 24 schräg geneigt zur zentralen Achse 28 der Getriebeeinheit 4. Wenn das erste Planetenrad 25 durch das erste Sonnenrad 20 angetrieben wird, wird das erste Planetenrad 25 am ersten innenverzahnten Zahnkranz 26 abgewälzt. Das erste Planetenrad 25 bewegt sich um das erste Sonnenrad 20 herum und rotiert dabei um die eigene Achse. Insofern bewegen sich das Kupplungsstück 22 und die Hohlwelle 24 in einer Taumelbewegung rund um die zentrale Achse 28 der Getriebeeinheit 4, wobei das Kupplungsstück 22 und die Hohlwelle 24 dabei mit unterschiedlicher Eigenrotation um die eigene Achse rotieren. Dabei können sich das Kupplungsstück 22 und die Hohlwelle 24 hinsichtlich ihrer Drehgeschwindigkeit, hinsichtlich ihrer Drehrichtung oder sowohl hinsichtlich Drehgeschwindigkeit und Drehrichtung unterscheiden.

Sowohl das Kupplungsstück 22 als auch die Hohlwelle 24 können von der Unterseite der Getriebeeinheit 4 aus zum Antrieb von in die Getriebeeinheit 4 eingesteckten Knet- und Rührwerkzeugen genutzt werden, mit denen in der Rührschüssel 2 befindliches Rührgut aufgeschlagen, durchmischt bzw. geknetet werden kann. Dabei werden durch das Kupplungsstück 22 und die Hohlwelle 24 unterschiedliche Rotationsgeschwindigkeiten und unterschiedliche Drehmomente zur Verfügung gestellt. Das Kupplungsstück 22 rotiert mit höherer Geschwindigkeit als die Hohlwelle 24 und eignet sich daher insbesondere zum Antrieb eines Schneebesens. Dagegen stellt die mit langsamerer

Drehgeschwindigkeit rotierende Hohlwelle 24 ein deutlich größeres Drehmoment zur Verfügung und eignet sich daher insbesondere zum Antrieb eines Knethakens, mit dem auch schwere Teige verarbeitet werden können. Durch die Bereitstellung des Kupplungsstücks 22 und der Hohlwelle 24 können verschiedene Rühr- und Knetwerkzeuge mit jeweils passender Geschwindigkeit, passender Drehrichtung und passendem Drehmoment angetrieben werden.

Alternativ dazu könnten als Zahnräder der Planetengetriebestufen auch Stirnräder anstelle von Kegelrädern verwendet werden, in diesem Fall würden die Drehachsen der Planetenräder parallel zur zentralen Achse der Getriebeeinheit stehen und zusammen mit der rotierbaren Trägereinheit um die zentrale Achse der Getriebeeinheit umlaufen.

Wenn das erste Planetenrad 25 angetrieben vom ersten Sonnenrad 20 am ersten innenverzahnten Zahnkranz 26 abgewälzt wird, wird durch diesen Umlaufs des ersten Planetenrads 25 die rotierbare Trägereinheit 23 angetrieben und in eine Rotationsbewegung versetzt. In der rotierbaren Trägereinheit 23 sind das Kupplungsstück 22 und die Hohlwelle 24 jeweils rotierbar gelagert, die daher mit der rotierbaren Trägereinheit 23 mitrotieren. Die rotierbare Trägereinheit 23 ist mit der abtriebsseitigen Ausgangswelle 29 verbunden, die durch die rotierbare Trägereinheit 23 in eine vergleichsweise langsame Rotation versetzt wird. Die abtriebsseitige Ausgangswelle 29 stellt den unteren Abschnitt der zentralen Welle der Getriebeeinheit 4 dar und ist über ein Drehlager 30 mit der abtriebsseitigen Ausgangswelle 18 gekoppelt. Die abtriebsseitige Ausgangswelle 29 kann an der Unterseite der Getriebeeinheit 4 als Zapfwelle für Zusatzgeräte genutzt werden, die eine vergleichsweise langsam rotierende Antriebswelle benötigen. Beispielsweise kann die abtriebsseitige Ausgangswelle 29 zum Antrieb eines Fleischwolfs, einer Getreidemühle, eines Pastavorsatzes, eines Eisbereiters etc. genutzt werden.

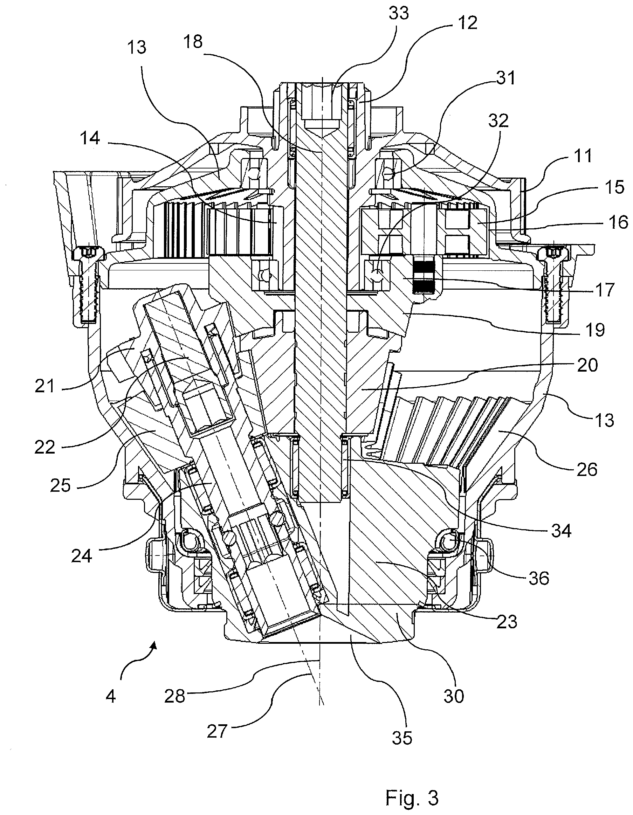

Figur 3 zeigt eine detaillierte Darstellung der Getriebeeinheit 4 im Längsschnitt, wobei die einzelnen Komponenten der Getriebeeinheit 4 bereits anhand der in Figur 2 gezeigten Schemadarstellung erläutert worden waren. In Figur 3 ist die Riemenscheibe 11 erkennbar, die mittels eines Zahnriemens angetrieben und in Rotation versetzt werden kann. Wie in Figur 3 gezeigt ist, ist die Riemenscheibe 11 noch oberhalb des Deckels des Gehäuses 13 angeordnet und überdeckt den oberen Teil des Gehäuses. Mit der

Riemenscheibe 11 ist die antriebsseitige Eingangswelle 12 verbunden, die als Hohlwelle ausgebildet ist und an der Oberseite der Getriebeeinheit 4 als Zapfwelle zur Verfügung steht. Die Riemenscheibe ist darüber hinaus mit dem dritten Sonnenrad 14 der dritten Getriebestufe 9 verbunden, die unmittelbar unterhalb des Deckels des Gehäuses 13 angeordnet ist. Die dritte Getriebestufe 9 umfasst außerdem das mindestens eine dritte Planetenrad 15 sowie den zweiten innenverzahnten Zahnkranz 16. Unterhalb des mindestens einen dritten Planetenrads 15 ist der Planetenträger 17 zu erkennen, der seinerseits mit der zentralen abtriebsseitigen Ausgangswelle 18 verbunden ist, die an der Oberseite der Getriebeeinheit 4 nach außen austritt. Durch die Umlaufbewegung des mindestens einen dritten Planetenrads 15 um das dritte Sonnenrad 14 wird auch der Planetenträger 17 in eine Drehbewegung versetzt. Dabei sind zur Lagerung der antriebsseitigen Eingangswelle 12, des dritten Sonnenrads 14 sowie des Planetenträgers 17 zwei Wälzlager 31 und 32 vorgesehen. Der Planetenträger 17 ist mit der zentralen abtriebsseitigen Ausgangswelle 18 verbunden, die an der Oberseite der Getriebeeinheit 4 herausgeführt ist und über ein Mitnahmeprofil 33 entsprechendes Zubehör antreiben kann. Dabei wird das untere Ende der abtriebsseitigen Ausgangswelle 18 in einem Axiallager 34 gelagert, beispielsweise in einem Nadellager.

Wie aus Figur 3 erkennbar ist, ist der untere Abschnitt des Planetenträgers 17 zugleich als zweites Sonnenrad 19 ausgebildet und steht in kämmendem Eingriff mit dem zweiten Planetenrad 21. Mit der abtriebsseitigen Ausgangswelle 18 ist darüber hinaus das erste Sonnenrad 20 drehfest verbunden, das sich in kämmendem Eingriff mit dem ersten Planetenrad 25 befindet. Das erste Planetenrad 25 steht darüber hinaus in kämmendem Eingriff mit dem ersten innenverzahnten Zahnkranz 26, der in Figur 3 gut zu erkennen ist. Das zweite Planetenrad 21 ist mit dem Kupplungsstück 22 verbunden und treibt das zweite Kupplungsstück 22 an. In das zweite Kupplungsstück 22 kann vom Führungstrichter 35 an der Unterseite der Getriebeeinheit 4 aus ein Rühr- oder Knetwerkzeug eingesteckt werden. Das erste Planetenrad 25 ist mit der Hohlwelle 24 verbunden und treibt die Hohlwelle 24 an. Die Hohlwelle 24 weist im Inneren ein entsprechendes Passungsprofil auf, in das ein passendes Rühr- oder Knetwerkzeug eingesteckt werden kann. Insofern hängt es von dem Profil des Schafts des jeweiligen Rühr- oder Knetwerkzeugs ab, ob das Werkzeug durch das Kupplungsstück 22 oder durch die Hohlwelle 24 angetrieben wird.

Anhand von Figur 3 ist erkennbar, dass die Hohlwelle 24 innerhalb der rotierbaren Trägereinheit 23 drehbar gelagert ist. Dabei wird durch die Umlaufbewegung des ersten Planetenrads 25, das angetrieben vom ersten Sonnenrad 20 entlang des ersten innenverzahnten Zahnkranzes 26 abrollt, auch die Rotation der rotierbaren Trägereinheit 23 vorgegeben, die der Bewegung des ersten Planetenrads 25 folgt und somit als Planetenträger für das erste Planetenrad 25 fungiert. Dabei ist die rotierbare Trägerinheit 23 auf einem umlaufenden Wälzlager 36 gelagert. An die rotierbare Trägereinheit 23 ist ein nabenartiger Ansatz angeformt, der als abtriebsseitige Ausgangswelle 29 verwendet werden kann.

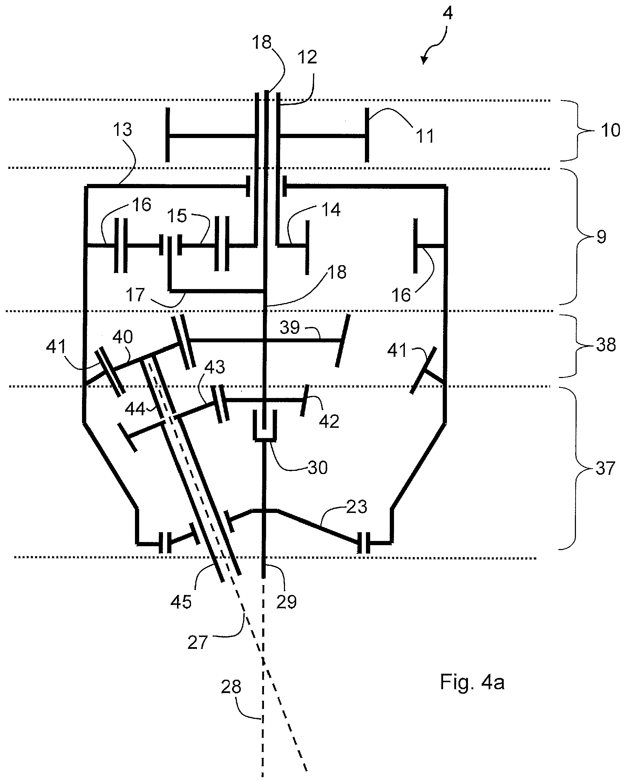

Figur 4a zeigt eine weitere schematische Darstellung, welche ebenfalls vier übereinander angeordnete Getriebestufen 37, 38, 9 und 10 umfasst, nämlich in der Reihenfolge von unten nach oben eine erste Getriebestufe 37, eine zweite Getriebestufe 38, eine dritte Getriebestufe 9 und eine vierte Getriebestufe 10. Dabei stimmen die dritte Getriebestufe 9 und die vierte Getriebestufe 10 identisch mit der in Figur 2 gezeigten dritten Getriebestufe 9 und vierten Getriebestufe 10 überein. Die Funktion der ersten Getriebestufe 37 und der zweiten Getriebestufe 38 ist jedoch im Vergleich zu Figur 2 vertauscht. Die in Figur 4a gezeigte zweite Getriebestufe 38 umfasst ein zweites Sonnenrad 39, das mit dem zweiten Planetenrad 40 kämmend in Eingriff steht. Darüber hinaus steht das zweite Planetenrad 40 in Eingriff mit einem ersten innenverzahnten Zahnkranz 41, der sich entlang der Innenwandung des Gehäuses 13 erstreckt. Mit der abtriebsseitigen Ausgangswelle 18 ist außerdem ein erstes Sonnenrad 42 der ersten Getriebestufe 37 verbunden, das kämmend mit einem ersten Planetenrad 43 in Eingriff steht. Durch das zweite Planetenrad 40 wird ein Kupplungsstück 44 angetrieben, in das von der Unterseite der Getriebeeinheit 4 aus ein Rühr- oder Knetwerkzeug einsteckbar ist. Durch das erste Planetenrad 43 wird eine Hohlwelle 45 angetrieben, in die ebenfalls von der Unterseite der Getriebeeinheit 4 aus ein Rühr- oder Knetwerkzeug eingesteckt werden kann. Das Kupplungsstück 44 und die Hohlwelle 45 sind beide in der rotierbaren Trägereinheit 23 rotierbar gelagert. In Figur 4a sind im Vergleich zur Figur 2 also im Wesentlichen die Funktionen der ersten Getriebestufe 37 und der zweiten Getriebestufe 38 miteinander vertauscht. Insbesondere wird in Figur 4a die Rotation der rotierbaren Trägereinheit 23 durch die Abwälzung des zweiten Planetenrads 40 am ersten innenverzahnten Zahnkranz 41 festgelegt.

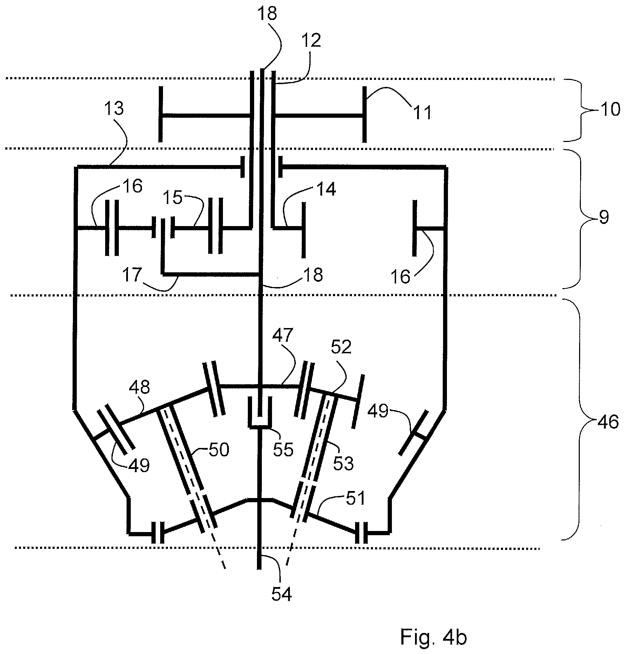

In Figur 4b ist eine Ausführung gezeigt, welche ebenfalls eine aus mehreren Getriebestufen aufgebaute Getriebeeinheit zeigt. Allerdings umfasst die in Figur 4b gezeigte Getriebeeinheit drei Getriebestufen, nämlich eine kombinierte erste und zweite Getriebestufe 46, eine dritte Getriebestufe 9 und eine vierte Getriebestufe 10, wobei die dritte Getriebestufe 9 und die vierte Getriebestufe 10 wieder mit der in Figur 2 und 4a gezeigten dritten Getriebestufe 9 und der vierten Getriebestufe 10 übereinstimmt.

Die erste und zweite Getriebestufe 46 umfasst ein erstes Sonnenrad 47, das mit der abtriebsseitigen Ausgangswelle 18 verbunden ist und kämmend mit einem ersten Planetenrad 48 in Eingriff steht, das seinerseits mit einem entlang der Innenwandung des Gehäuses 13 umlaufenden ersten innenverzahnten Zahnkranz 49 kämmt. Das erste Planetenrad 48 ist mit einem Kupplungsstück 50 verbunden, die in der rotierbaren Trägereinheit 51 rotierbar gelagert ist, wobei in das Kupplungsstück 50 von der Unterseite der Getriebeeinheit 4 aus ein Rühr- oder Knetwerkzeug einsteckbar ist. Darüber hinaus umfasst die erste und zweite Getriebestufe 46 ein weiteres Planetenrad 52, das jedoch nicht mit dem ersten innenverzahnten Zahnkranz 49 kämmt. Dieses weitere Planetenrad 52 ist mit einem weiteren Kupplungsstück 53 verbunden, das ebenfalls in der rotierbaren Trägereinheit 51 rotierbar gelagert ist. Bei dem in Figur 4b gezeigtem Beispiel wird die Rotation der rotierbaren Trägereinheit 51 durch die Abwälzung des ersten Planetenrads 48 auf dem ersten innenverzahnten Zahnkranz 49 festgelegt, wobei das weitere Planetenrad 52 dieser vorgegebenen Bewegung folgt. Infolge der unterschiedlichen Durchmesser der beiden Planetenräder 48 und 52 werden durch die beiden Kupplungsstücke 50 und 53 jeweils unterschiedliche Rotationsgeschwindigkeiten und Drehmomente zur Verfügung gestellt. Dabei ist im Unterschied zu den in Figur 2 und Figur 4a gezeigten Beispielen für jedes der Kupplungsstücke 50 und 53 jeweils ein eigene Einsrecköffnung in der rotierbaren Trägereinheit 51 vorgesehen, über die ein Rühr- oder Knetwerkzeug in das jeweilige Kupplungsstück eingesteckt werden kann. Die rotierbare Trägereinheit 51 ist mit der abtriebsseitigen Ausgangswelle 54 verbunden, die durch die rotierbare Trägereinheit 51 in eine vergleichsweise langsame Rotation versetzt wird. Die abtriebsseitige Ausgangswelle 54 stellt den unteren Abschnitt der zentralen Welle der Getriebeeinheit 4 dar und ist über ein Drehlager 35 mit der abtriebsseitigen Ausgangswelle 18 gekoppelt.

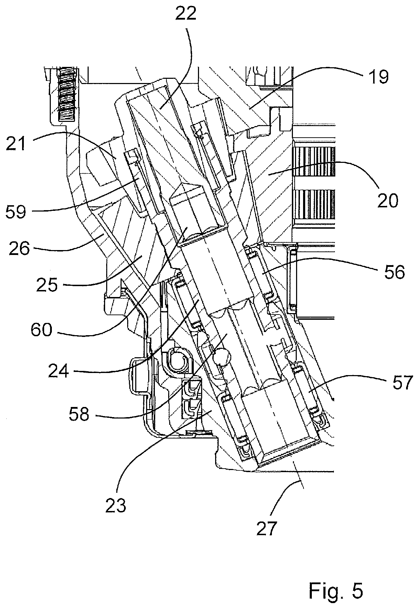

In Figur 5 ist die zusammen mit der rotierbaren Trägereinheit 23 rotierend umlaufende Halterungs- und Antriebsvorrichtung für rotierende Rühr- oder Knetwerkzeuge nochmals vergrößert herausgezeichnet. Zu erkennen ist die Hohlwelle 24, die sich durch das erste Planetenrad 25 hindurch erstreckt. Die Hohlwelle 24 ist durch das obere Lager 56 und das untere Lager 57 in der rotierbaren Trägereinheit 23 rotierbar gelagert. Die Hohlwelle 24 ist mit dem ersten Planetenrad 25 fest verbunden und wird durch das erste Planetenrad 25 angetrieben. Das erste Planetenrad 25 ist Teil der ersten Getriebestufe 7 und steht einerseits mit dem ersten Sonnenrad 20 und andererseits mit dem ersten innenverzahnten Zahnkranz 26 in Eingriff. Wenn das durch das erste Sonnenrad 20 angetriebene erste Planetenrad 25 auf dem ersten innenverzahnten Zahnkranz 26 abrollt, wird dadurch zum einen eine Eigenrotation der Hohlwelle 24 um die Achse 27 verursacht. Darüber hinaus wird durch das Abrollen des ersten Planetenrads 25 am ersten innenverzahnten Zahnkranz 26 über die in der rotierbaren Trägereinheit 23 drehbar gelagerte Hohlwelle 24 eine Drehung der rotierbaren Trägereinheit 23 um die zentrale Achse der Getriebeeinheit 4 erzwungen. Durch das Abrollen des ersten Planetenrades 25 am ersten innenverzahnten Zahnkranz 26 wird daher die Rotation der rotierbaren Trägereinheit 23 um die eigene Drehachse festgelegt. Dadurch führt die Hohlwelle 24 zwei überlagerte Drehbewegungen durch: zum einen bewegt sich die in der rotierbaren Trägereinheit 23 gelagerte Hohlwelle 24 mit der rotierbaren Trägereinheit 23 rotierend um die Drehachse der rotierbaren Trägereinheit 23. Darüber hinaus rotiert die Hohlwelle 24 um die eigene Achse 27.

Die Hohlwelle 24 kann zum Antrieb einer in die Hohlwelle eingesteckten Welle eines Werkzeugs des ersten Typs dienen. Hierzu ist die Hohlwelle 24 als Kupplungsstück ausgebildet und weist ein erstes Passungsprofil 58 auf, beispielsweise ein sechseckiges Passungsprofil. Wenn die erste Welle des ersten Werkzeugs ein Passungsstück aufweist, das zum ersten Passungsprofil 58 komplementär ist und beim Einschieben in die Hohlwelle 24 von dem ersten Passungsprofil 58 formschlüssig umfasst wird, dann wird zwischen der Hohlwelle 24 und der eingesteckten ersten Welle des ersten Werkzeugs eine drehfeste Kupplung ausgebildet. Das erste Werkzeug kann dann durch die Hohlwelle 24 angetrieben werden.

Zur Bereitstellung eines weiteren Gangs mit einer schnelleren Umlaufgeschwindigkeit ist oberhalb der Hohlwelle 24 und des ersten Planetenrades 25 das zweite Planetenrad 21 angeordnet, das mit dem zweiten Sonnenrad 19 in Eingriff steht und durch dieses angetrieben wird. Zur rotierbaren Lagerung des zweiten Planetenrades 21 weist die Hohlwelle 24 an ihrem oberen Ende ein ringförmiges Drehlager 59 auf, auf das das zweite Planetenrad 21 rotierbar aufgesteckt ist. Das zweite Planetenrad 21 ist daher koaxial zur Hohlwelle 24 und zum ersten Planetenrad 25 ausgebildet. Das zweite Planetenrad 21 folgt zum einen der Drehbewegung der rotierbaren Trägereinheit 23 um die zentrale Achse und führt andererseits eine Eigenrotation um die Achse 27 aus, wobei sich die Eigenrotation des zweiten Planetenrades 21 von der Eigenrotation des ersten Planetenrades 25 in Hinblick auf mindestens eines von Drehgeschwindigkeit und Drehrichtung unterscheidet. Beispielsweise kann die Eigenrotationsgeschwindigkeit des zweiten Planetenrades 21 höher sein als die Eigenrotationsgeschwindigkeit des ersten Planetenrades 25, sodass durch das zweite Planetenrad 21 ein besonders schneller Gang zum Antrieb von Rühr- und Knetwerkzeugen zur Verfügung gestellt wird. Im zweiten Planetenrad 21 ist ein Kupplungsstück 22 vorgesehen, in das eine zweite Welle eines zweiten Werkstücks eingesteckt werden kann. Hierzu weist das Kupplungsstück 22 ein zweites Passungsprofil 54 auf, in das ein entsprechend geformtes Passungsstück an der Welle eines zweiten Werkzeugs formschlüssig eingeschoben werden kann. Hierzu wird die Welle des zweiten Werkzeugs mit dem zweiten Passungsstück durch die Hohlwelle 24 und das erste Passungsprofil 58 hindurch in das zweite Passungsprofil 60 eingesteckt. Auf diese Weise kann eine drehfeste Kupplung zwischen dem zweiten Planetenrad 21 und der Welle des zweiten Werkzeugs hergestellt werden. Die Welle des zweiten Werkzeugs wird dabei nicht vom ersten Passungsprofil 58 der Hohlwelle 24 erfasst. Stattdessen wird die Welle des zweiten Werkzeugs durch das schneller drehende zweite Planetenrad 21 angetrieben, sodass durch das zweite Planetenrad 21 eine im Vergleich zur Hohlwelle 24 erhöhte Rotationsgeschwindigkeit zur Verfügung gestellt werden kann.

Insofern kann durch die Auswahl eines geeigneten Passungsstücks festgelegt werden, ob das jeweilige Werkstück durch die langsamer drehende Hohlwelle 24 oder das schneller drehende zweite Planetenrad 21 mit dem Kupplungsstück 22 angetrieben wird. Wenn das Passungsstück an der Welle so ausgebildet ist, dass es mit dem ersten Passungsprofil 58 der Hohlwelle 24 formschlüssig in Eingriff kommt, dann wird das Werkzeug durch die Hohlwelle 24 angetrieben. Wenn das Passungsstück dagegen so ausgebildet ist, dass es sich ohne Eingriff durch das erste Passungsprofil 58 hindurch erstreckt und dann mit dem zweiten Passungsprofil 60 in formschlüssigen Eingriff kommt, dann wird das Werkzeug durch das schneller drehende zweite Planetenrad 21 angetrieben.

Dabei eignet sich die Hohlwelle 24 insbesondere zum Antrieb von Werkzeugen, die ein hohes Drehmoment bei vergleichsweise niedriger Drehgeschwindigkeit benötigen, also beispielsweise zum Antrieb von Knetwerkzeugen zum Kneten von Teigen. Im Gegensatz dazu wird der durch das zweite Planetenrad 21 bereitgestellte Antrieb mit hoher Drehgeschwindigkeit und geringem Drehmoment beispielsweise zum Antrieb eines Schneebesens verwendet, der zum schnellen Aufschlagen von Sahne oder Eiweiß eine vergleichsweise hohe Drehgeschwindigkeit benötigt. Durch das Bereitstellen von unterschiedlich schnell drehenden Kupplungsstücken kann für jedes Werkzeug die optimale Rotationsgeschwindigkeit ausgewählt werden. Da für jeden Anwendungszweck die passende Übersetzung bereitgestellt wird, kann dadurch die Motorleistung insgesamt abgesenkt werden, was auch zu einem geräuschärmeren Betrieb der Küchenmaschine beiträgt.

Durch geeignete Dimensionierung des zweites Sonnenrades 19, des zweiten Planetenrades 21, des ersten Sonnenrades 20 und des ersten Planetenrades 25 kann festgelegt werden, ob das zweite Planetenrad 21 in derselben Rotationsrichtung wie die Hohlwelle 24 oder in entgegengesetzter Rotationsrichtung zur Hohlwelle 24 rotieren soll. Dies hängt von dem Faktor i ab, der sich aus den Zähnezahlen P2 und S2 des zweiten Planetenrades 21 und des zweiten Sonnenrades 19 sowie den Zähnezahlen P1 und S1 des ersten Planetenrades 25 und des ersten Sonnenrades 20 wie folgt bestimmen lässt:

$$i = (P2/S2)/(P1/S1).$$

Wenn i <1 gilt, dann rotiert das zweite Planetenrad 21 in derselben Richtung wie die Hohlwelle 24, aber mit höherer Geschwindigkeit als die Hohlwelle 24. Wenn dagegen i>1 gilt, dann rotiert das zweite Planetenrad 21 in entgegengesetzter Richtung zur Hohlwelle 24, aber mit höherer Geschwindigkeit als die Hohlwelle 24.

**Bezugszeichenliste**

| 1 | Küchenmaschine |
|---|---|
| 2 | Rührschüssel |
| 3 | Arm der Küchenmaschine |
| 4 | Getriebeeinheit |
| 5 | koaxiale Ausgangswellen |
| 6 | Rühr- oder Knetwerkzeug |
| 7 | erste Getriebestufe |
| 8 | zweite Getriebestufe |
| 9 | dritte Getriebestufe |
| 10 | vierte Getriebestufe |
| 11 | Riemenscheibe |
| 12 | antriebsseitige Eingangswelle |
| 13 | Gehäuse |
| 14 | drittes Sonnenrad |
| 15 | drittes Planetenrad |
| 16 | zweiter innenverzahnter Zahnkranz |

17 Planetenträger
18 abtriebsseitige Ausgangswelle
19 zweites Sonnenrad
20 erstes Sonnenrad
21 zweites Planetenrad
22 Kupplungsstück
23 rotierbare Trägereinheit
24 Hohlwelle
25 erstes Planetenrad
26 erster innenverzahnter Zahnkranz
27 Achse des Kupplungsstücks 22 und der Hohlwelle 24
28 zentrale Achse
29 abtriebsseitige Ausgangswelle
30 Drehlager
31 Wälzlager
32 Wälzlager
33 Mitnahmeprofil
34 Axiallager
35 Führungstrichter
36 Wälzlager
37 erste Getriebestufe
38 zweite Getriebestufe
39 zweites Sonnenrad
40 zweites Planetenrad
41 erster innenverzahnter Zahnkranz
42 erstes Sonnenrad
43 erstes Planetenrad
44 Kupplungsstück
45 Hohlwelle
46 erste und zweite Getriebestufe
47 erstes Sonnenrad
48 erstes Planetenrad
49 erster innenverzahnter Zahnkranz
50 Kupplungsstück
51 rotierbare Trägereinheit
52 weiteres Planetenrad
53 weiteres Kupplungsstück
54 abtriebsseitige Ausgangswelle
55 Drehlager
56 oberes Lager
57 unteres Lager
58 erstes Passungsprofil
59 ringförmiges Drehlager
60 zweites Passungsprofil

**Patentansprüche**

1. Eine Getriebeeinheit (4) für eine Küchenmaschine (1), welche aufweist
eine erste Getriebestufe (7, 37, 46) mit einem ersten Sonnenrad (20, 42, 47) und mindestens einem mit dem ersten Sonnenrad (20, 42, 47) in Eingriff stehenden ersten Planetenrad (25, 43, 48), das an einem Planetenträger (23, 51) drehbar gelagert ist,
ein erstes Kupplungsstück (24, 45, 50) zur Aufnahme einer ersten Welle eines ersten Werkzeugs, wobei das erste Kupplungsstück (24, 45, 50) mit einem ersten Planetenrad (25, 43, 48) der ersten Getriebestufe (7, 37, 46) verbunden ist,
wobei zusätzlich zum ersten Kupplungsstück (24, 45, 50) ein zweites Kupplungsstück (22, 44, 53) zur Aufnahme einer zweiten Welle eines zweiten Werkzeugs am oder im Planetenträger (23, 51) rotierbar gelagert ist, wobei die Getriebeeinheit (4) dazu ausgelegt ist, das zweite Kupplungsstück (22) so anzutreiben, dass das zweite Kupplungsstück (22, 44, 53) mit einer vom ersten Kupplungsstück (24, 45, 50) unterschiedlichen Eigenrotation mit dem Planetenträger (23, 51) mitrotiert,
wobei
die Getriebeeinheit (4) eine zweite Getriebestufe (8, 38) umfasst, die dazu ausgelegt ist, das zweite Kupplungsstück (22, 44) so anzutreiben, dass das zweite Kupplungsstück (22, 44) mit einer vom ersten Kupplungsstück (24, 45) unterschiedlichen Eigenrotation mit dem Planetenträger (23) mitrotiert, **dadurch gekennzeichnet, dass** die zweite Getriebestufe (8, 38) ein zweites Sonnenrad (19, 39) und mindestens ein mit dem zweiten Sonnenrad (19, 39) in Eingriff stehendes zweites Planetenrad (21, 40) umfasst, das an dem Planetenträger (23) drehbar gelagert ist, wobei eines der zweiten Planetenräder (21, 40) mit dem zweiten Kupplungsstück (22, 44) verbunden ist.

2. Eine Getriebeeinheit (4) nach Anspruch 1, **dadurch gekennzeichnet, dass** das erste Kupplungsstück (24, 45, 50) koaxial zu dem zweiten Kupplungsstück (22, 44, 53) angeordnet ist.

3. Eine Getriebeeinheit (4) nach Anspruch 1 oder Anspruch 2, **dadurch gekennzeichnet, dass** das erste Kupplungsstück (24, 45, 50) ein erstes Passungsprofil (58) aufweist, in dem ein an einer ersten Welle eines ersten Werkzeugs angebrachtes erstes Passungsstück formschlüssig aufnehmbar ist.

4. Eine Getriebeeinheit (4) nach einem der Ansprüche 1 bis 3, **dadurch gekennzeichnet, dass** das zweite Kupplungsstück (22, 44, 53) ein zweites Passungsprofil (60) aufweist, in dem ein an einer zweiten Welle eines zweiten Werkzeugs angebrachtes zweites Passungsstück formschlüssig aufnehmbar ist.

5. Eine Getriebeeinheit (4) nach einem der Ansprüche 1 bis 4, **dadurch gekennzeichnet, dass** das erste Kupplungsstück (24, 45, 50) als Hohlwelle ausgebildet ist, die sich durch das erste Planetenrad (25, 43, 48) hindurch erstreckt.

6. Eine Getriebeeinheit (4) nach einem der vorhergehenden Ansprüche, **dadurch gekennzeichnet, dass** das zweite Planetenrad (21, 40) auf dem ersten Planetenrad (25, 43) oder auf dem mit dem ersten Planetenrad (25, 43) verbundenen ersten Kupplungsstück (24, 45) rotierbar gelagert ist.

7. Eine Getriebeeinheit (4) nach einem der vorhergehenden Ansprüche, **dadurch gekennzeichnet, dass** das zweite Kupplungsstück (22, 44) als in dem zweiten Planetenrad (21, 40) vorgesehene Aufnahme ausgebildet ist.

8. Eine Getriebeeinheit (4) nach einem der vorhergehenden Ansprüche, **dadurch gekennzeichnet, dass** das erste Kupplungsstück (24, 45) als Hohlwelle ausgebildet ist, die sich durch das erste Planetenrad (25, 43) hindurch erstreckt, dass das zweite Kupplungsstück (22, 44) als in dem zweiten Planetenrad (21, 40) vorgesehene Aufnahme ausgebildet ist, und dass die Hohlwelle (24, 45) zu der im zweiten Planetenrad (21, 40) vorgesehenen Aufnahme konzentrisch und koaxial ausgebildet ist.

9. Eine Getriebeeinheit (4) nach einem der vorhergehenden Ansprüche 5 bis 8, **dadurch gekennzeichnet, dass** das zweite Kupplungsstück (22, 44, 53) dazu ausgebildet ist, eine höhere Drehzahl und ein niedrigeres Drehmoment zur Verfügung zu stellen als das erste Kupplungsstück (24, 45, 50).

10. Eine Getriebeeinheit (4) nach einem der vorhergehenden Ansprüche, **dadurch gekennzeichnet, dass** die Getriebeeinheit (4) zwei oder mehr in der rotierbaren Trägereinheit (23) gelagerte Kupplungsstücke (22, 24, 44, 45) für abtriebsseitige Ausgangswellen aufweist, deren Achsen koaxial zueinander angeordnet sind.

11. Eine Küchenmaschine (1), welche eine Getriebeeinheit (4) nach einem der Ansprüche 1 bis 10 umfasst.

**Claims**

1. Gear unit (4) for a food processor (1), which has a first gear stage (7, 37, 46) with a first sun wheel (20, 42, 47) and at least one first planetary wheel (25, 43, 48) which engages with the first sun wheel (20, 42, 47) and is rotatably mounted on a planetary carrier (23, 51), a first coupling piece (24, 45, 50) for receiving a first shaft of a first tool, wherein the first coupling piece (24, 45, 50) is connected to a first planetary wheel (25, 43, 48) of the first gear stage (7, 37, 46), wherein in addition to the first coupling piece (24, 45, 50) a second coupling piece (22, 44, 53) for receiving a second shaft of a second tool is mounted rotatably on or in the planetary carrier (23, 51), wherein the gear unit (4) is designed to drive the second coupling piece (22) so that the second coupling piece (22, 44, 53) rotates together with the planetary carrier (23, 51) with a self-rotation which differs from the first coupling piece (24, 45, 50), wherein the gear unit (4) comprises a second gear stage (8, 38), which is designed to drive the second coupling piece (22, 44) so that the second coupling piece (22, 44) rotates together with the planetary carrier (23) with a self-rotation which differs from the first coupling piece (24, 45), **characterised in that** the second gear stage (8, 38) comprises a second sun wheel (19, 39) and at least one second planetary wheel (21, 40) which engages with the second sun wheel (19, 39) and which is mounted rotatably on the planetary carrier (23), wherein one of the second planetary wheels (21, 40) is connected to the second coupling piece (22, 44).

2. Gear unit (4) according to claim 1, **characterised in that** the first coupling piece (24, 45, 50) is arranged coaxially with respect to the second coupling piece (22, 44, 53).

3. Gear unit (4) according to claim 1 or claim 2, **characterised in that** the first coupling piece (24, 45, 50) has a first fit profile (58), in which a first fit piece attached to a first shaft of a first tool can be received in a form-fit manner.

4. Gear unit (4) according to one of claims 1 to 3, **characterised in that** the second coupling piece (22, 44, 53) has a second fit profile (60), in which a second fit piece attached to a second shaft of a second tool can be received in a form-fit manner.

5. Gear unit (4) according to one of claims 1 to 4, **characterised in that** the first coupling piece (24, 45, 50) is embodied as a hollow shaft, which extends through the first planetary wheel (25, 43, 48).

6. Gear unit (4) according to one of the preceding claims, **characterised in that** the second planetary wheel (21, 40) is mounted rotatably on the first planetary wheel (25, 43) or on the first coupling piece (24, 45) which is connected to the first planetary wheel (25, 43).

7. Gear unit (4) according to one of the preceding claims, **characterised in that** the second coupling piece (22, 44) is embodied as a receptacle provided in the second planetary wheel (21, 40).

8. Gear unit (4) according to one of the preceding claims, **characterised in that** the first coupling piece (24, 45) is embodied as a hollow shaft, which extends through the first planetary wheel (25, 43), that the second coupling piece (22, 44) is embodied as a receptacle provided in the second planetary wheel (21, 40), and that the hollow shaft (24, 45) is embodied concentrically and coaxially with respect to the receptacle provided in the second planetary wheel (21, 40).

9. Gear unit (4) according to one of the preceding claims 5 to 8, **characterised in that** the second coupling piece (22, 44, 53) is embodied to provide a higher rotational speed and a lower torque than the first coupling piece (24, 45, 50).

10. Gear unit (4) according to one of the preceding claims, **characterised in that** the gear unit (4) has two or more coupling pieces (22, 24, 44, 45) mounted in the rotatable carrier unit (23) for the output-side output shafts, the axes of which are arranged coaxially with respect to one another.

11. Food processor (1), which comprises a gear unit (4) according to one of claims 1 to 10.

**Revendications**

1. Unité d'engrenage (4) pour un robot ménager (1), laquelle comprend
un premier étage d'engrenage (7, 37, 46) doté d'une première roue solaire (20, 42, 47) et au moins d'une première roue planétaire (25, 43, 48) en prise avec la première roue solaire (20, 42, 37), laquelle roue planétaire est logée de manière rotative sur un support planétaire (23, 51),
une première pièce de couplage (24, 45, 50) pour le logement d'un premier arbre d'un premier outil, la première pièce de couplage (24, 45, 50) étant reliée à une première roue planétaire (25, 43, 48) du premier étage d'engrenage (7, 37, 46),
dans laquelle,
en plus de la première pièce de couplage (24, 45, 50), une deuxième pièce de couplage (22, 44, 53) pour le logement d'un deuxième arbre d'un deuxième outil est logée de manière rotative sur ou dans le support planétaire (23, 51), dans laquelle l'unité d'engrenage (4) est conçue pour entraîner la deuxième pièce de couplage (22) de manière à ce que la deuxième pièce de couplage (22, 44, 53) tourne en même temps que le support planétaire (23, 51) avec une propre rotation différente de la première pièce de couplage (24, 45, 50),
dans laquelle,
l'unité d'engrenage (4) comprend un deuxième étage d'engrenage (8, 38) qui est conçu pour entraîner la deuxième pièce de couplage (22, 44) de manière à ce que la deuxième pièce de couplage (22, 44) tourne en même temps que le support planétaire (23) avec une propre rotation différente de la première pièce de couplage (24, 45),
**caractérisée en ce que**
le deuxième étage d'engrenage (8, 38) comprend une deuxième roue solaire (19, 39) et au moins une deuxième roue planétaire (21, 40) en prise avec la deuxième roue solaire (19, 39), laquelle est logée de manière rotative sur le support planétaire (23), une des deuxièmes roues planétaires (21, 40) étant reliée à la deuxième pièce de couplage (22, 44).

2. Unité d'engrenage (4) selon la revendication 1, **caractérisée en ce que** la première pièce de couplage (24, 45, 50) est disposée coaxialement à la deuxième pièce de couplage (22, 44, 53).

3. Unité d'engrenage (4) selon la revendication 1 ou la revendication 2, **caractérisée en ce que** la première pièce de couplage (24, 45, 50) présente un premier profil d'ajustement (58) dans lequel une première pièce d'ajustement placée sur un premier arbre d'un premier outil peut être logée par adhérence de forme.

4. Unité d'engrenage (4) selon l'une quelconque des revendications 1 à 3, **caractérisée en ce que** la deuxième pièce de couplage (22, 44, 53) présente un deuxième profil d'ajustement (60) dans lequel une deuxième pièce d'ajustement placée sur un deuxième arbre d'un deuxième outil peut être logée par adhérence de forme.

5. Unité d'engrenage (4) selon l'une quelconque des revendications 1 à 4, **caractérisée en ce que** la première pièce de couplage (24, 45, 50) est réalisée comme arbre creux qui s'étend à travers la première roue planétaire (25, 43, 48).

6. Unité d'engrenage (4) selon l'une quelconque des revendications précédentes, **caractérisée en ce que** la deuxième roue planétaire (21, 40) est logée de manière rotative sur la première roue planétaire (25, 43) ou sur la première pièce de couplage (24, 45) reliée à la première roue planétaire (25, 43).

7. Unité d'engrenage (4) selon l'une quelconque des revendications précédentes, **caractérisée en ce que** la deuxième pièce de couplage (22, 44) est réalisée comme logement ménagé dans la deuxième roue planétaire (21, 40).

8. Unité d'engrenage (4) selon l'une quelconque des revendications précédentes, **caractérisée en ce que** la première pièce de couplage (24, 45) est réalisée comme arbre creux qui s'étend à travers la première roue planétaire (25, 43), **en ce que** la deuxième pièce de couplage (22, 44) est réalisée comme logement ménagé dans la deuxième roue planétaire (21, 40), et **en ce que** l'arbre creux (24, 45) est réalisé de manière concentrique et coaxiale au logement ménagé dans la deuxième roue planétaire (21, 40).

9. Unité d'engrenage (4) selon l'une quelconque des revendications précédentes 5 à 8, **caractérisée en ce que** la deuxième pièce de couplage (22, 44, 53) est réalisée pour fournir une vitesse de rotation plus élevée et un couple plus bas que la première pièce de couplage (24, 45, 50).

10. Unité d'engrenage (4) selon l'une quelconque des revendications précédentes, **caractérisée en ce que** l'unité d'engrenage (4) comprend deux pièces de couplage (22, 24, 44, 45) ou plus, logées dans l'unité de support (23) rotative, pour les arbres de sortie côté entraînement, dont les axes sont disposés coaxialement les uns par rapport aux autres.

11. Robot ménager (1) qui comprend une unité d'engrenage (4) selon l'une quelconque des revendications 1 à 10.

Fig. 1

Fig. 2

Fig. 3

Fig. 4a

Fig. 4b

Fig. 5

**IN DER BESCHREIBUNG AUFGEFÜHRTE DOKUMENTE**

**In der Beschreibung aufgeführte Patentdokumente**

- DE 2551842 C3
- DE 1021986 B
- DE 102012206162 A1
- DE 4033020 A1